(19) **Europäisches Patentamt**
**European Patent Office**
**Office européen des brevets**

(11) **EP 1 662 737 B1**

(12) **EUROPEAN PATENT SPECIFICATION**

(45) Date of publication and mention
of the grant of the patent:
**23.04.2008 Bulletin 2008/17**

(51) Int Cl.:
***H04L 27/26*** *(2006.01)*

(21) Application number: **05025909.2**

(22) Date of filing: **28.11.2005**

(54) **Apparatus and method for reducing a peak to average power ratio in a multi-carrier communication system**

Vorrichtung und Verfahren zur Verringerung des Verhältnisses von Spitzen zur Durchschnittsleistung in Mehrträgerkommunikationssystemen

Procédé et dispositif permettant de réduire le rapport entre la puissance de crête et la puissance moyenne dans un système de communication à porteuses multiples

(84) Designated Contracting States:
**AT BE BG CH CY CZ DE DK EE ES FI FR GB GR HU IE IS IT LI LT LU LV MC NL PL PT RO SE SI SK TR**

(30) Priority: **26.11.2004 RU 2004134537**

(43) Date of publication of application:
**31.05.2006 Bulletin 2006/22**

(73) Proprietor: **Samsung Electronics Co., Ltd.**
**Suwon-si, Gyeonggi-Do (KR)**

(72) Inventors:
• **Rog, Andrey Leonidivich**
**Moscow (RU)**
• **Strashnov, Aleksandr Yurievich**
**Serpukhov, Moscow District (RU)**
• **Lee, Hyeon-Woo**
**Samsung Electronics Co., Ltd.**
**Suwon-si**
**Gyeonggi-do (KR)**

• **Park, Seong-Ill**
**Samsung Electronics Co., Ltd.**
**Suwon-si**
**Gyeonggi-do (KR)**
• **Kim, Do-Young**
**Samsung Electronics Co., Ltd.**
**Suwon-si**
**Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 1 056 250** **WO-A-03/081821**
**US-A1- 2004 136 314**

**EP 1 662 737 B1**

**Description**

**BACKGROUND OF THE INVENTION**

1. Field of the Invention

The present invention relates generally to a communication system using a multi-carrier, and more particularly to an apparatus and a method for minimizing the Peak to Average Power Ratio (PAPR) in an Orthogonal Frequency Division Multiplexing (OFDM) communication system.

2. Description of the Related Art

An OFDM scheme is now actively being researched for high speed data transmission in wired or wireless channels. The OFDM scheme, which transmits data using multiple carriers, is a special type of a Multiple Carrier Modulation (MCM) scheme in which a serial symbol sequence is converted into parallel symbol sequences and the parallel symbol sequences are modulated with a plurality of mutually orthogonal subcarriers (or subcarrier channels) before being transmitted.

According to the conventional OFDM scheme, a plurality of subcarriers are transmitted while maintaining the orthogonality between them, thereby achieving an optimum transmission efficiency in high speed data transmission. Further, the OFDM scheme has a good frequency use efficiency and is robust against the multi-path fading, such that it can achieve the optimum transmission efficiency in high speed data transmission. Further, the OFDM scheme can reduce Inter-Symbol Interference (ISI) by using the guard interval, can simplify the design of the equalizer, and is robust against impulse noise.

Additionally, the OFDM communication system can show a normal system performance when using a signal having a small PAPR. More specifically, the OFDM communication system is a multi-carrier communication system using a plurality of subcarriers, such that the orthogonality between the subcarriers is important in the OFDM communication system. Therefore, the phase is set up for each of the subcarrier while maintaining the orthogonality between the subcarriers. However, when the phase changes during the course of signal transmission through the subcarriers, the subcarriers may overlap each other. Consequently, the overlapping signal caused by the phase change may get out of the linear range of an amplifier in the OFDM communication system, and it becomes impossible to achieve normal signal transmission or reception. Therefore, it is necessary for the OFDM communication system to use a signal having the minimum PAPR.

Because the minimization of PAPR is an important factor in improving the performance of the OFDM communication system, various research efforts for minimizing the PAPR are being examined. Existing schemes for minimizing the PAPR include a clipping scheme, a block coding scheme, and a phase control scheme. Hereinafter, the schemes for minimizing PAPR will be briefly described.

According to the clipping scheme, when a signal exceeds a predetermined size, the portion exceeding the predetermined size is clipped away from the signal, in order to reduce the PAPR. It is very easy to implement the clipping scheme, because simply clipping the signal in such a manner that the clipped signal does not exceed the predetermined size is all that is required to implement the clipping scheme. However, the clipping scheme generates in-band distortion due to the non-linear operation, which increases the Bit Error Rate (BER), and allows interference between adjacent channels due to out-band clipping noise.

According to the block coding scheme, a coding scheme is applied to redundant subcarriers in order to reduce the PAPR of the entire subcarriers. The block coding scheme has an error correction capability because it applies the coding scheme. Further, the block coding scheme can reduce the PAPR without signal distortion. However, the block coding scheme has very bad spectrum efficiency when the number of subcarriers is too large. Moreover, the block coding scheme requires an excessively large look-up table or an excessively large generation matrix, which increases the complexity in operation.

The phase control scheme can be briefly classified into two types of schemes, including a Selective Mapping (SLM) scheme and a Partial Transmit Sequence (PTS) scheme. According to the SLM scheme, M number of statistically independent sequences having a length of N are multiplied to identical data having a length of N, and the sequence that has the lowest PAPR among the sequences is selected and transmitted. Further, according to the PTS scheme, a data block having a length of N is divided into M number of sub-blocks, and each of the M sub-blocks is subjected to an (L+P)-point IFFT. The M number of (L+P)-point IFFT-ed sub-blocks are each multiplied by a phase parameter for minimizing the PAPR, and the sum of the products of the multiplications is transmitted. The SLM scheme and the PTS scheme can efficiently reduce the PAPR. However, these two schemes require the IFFT operation for each of the M sub-blocks, thereby increasing the complexity thereof.

US 2004/0136314 A1 discloses a signal transmission apparatus and method for minimizing peak-to-average power ratio. The corresponding apparatus comprises a subband divider for dividing information data subcarrier signals into subband signals. Additional information subcarrier signals are inserted into the information data subcarrier signals which indicate whether a dummy sequence is inserted and an address bit indicating a position of a subband into which the dummy sequence is to be inserted. For inserting a dummy sequence also a dummy sequence inserter is provided. An Inverse Fast Fourier Transform block generates a first and a second OFDM symbol signal and a controller determines assigned bit value and an address bit value of the additional information. Finally, a transmitter transmits at least one of the first and second signals output from the IFFT blocks over the downlink.

## SUMMARY OF THE INVENTION

It is an object of the present invention to provide an apparatus and a method for minimizing a PAPR in a broadband wireless communication system wherein such a reduction is achieved with a high transmission capacity and without a signal correction process.

The object is solved by the features of the independent claims.

Advantageous embodiments of the invention are disclosed by the subclaims.

## BRIEF DESCRIPTION OF THE DRAWINGS

The above and other objects, features, and advantages of the present invention will be more apparent from the following detailed description taken in conjunction with the accompanying drawings, in which:

FIG. 1 is a block diagram schematically illustrating a transmitter of a conventional OFDM communication system;
FIG. 2 is a block diagram schematically illustrating a receiver of a conventional OFDM communication system;
FIG. 3 is a block diagram for illustrating an operation of a transmitter with a subcarrier redundancy in a conventional OFDM communication system;
FIG. 4 is a block diagram for schematically illustrating a transmitter according to an embodiment of the present invention;
FIG. 5 is a flowchart for schematically illustrating a procedure of signal processing by the transmitter according to a preferred embodiment of the present invention;
FIG. 6 is a block diagram schematically illustrating a receiver according to an embodiment of the present invention;
FIG. 7 is a flowchart of a process for signal processing in the receiver according to an embodiment of the present invention;
FIG. 8 is a block diagram schematically illustrating a receiver of an OFDM communication system according to a preferred embodiment of the present invention;
FIG. 9 is a block diagram schematically illustrating a transmitter of an OFDM communication system according to a preferred embodiment of the present invention; and
FIG. 10 is a graph illustrating performance of the present invention.

## DETAILED DESCRIPTION OF THE PREFERRED EMBODIMENT

Hereinafter, preferred embodiments of the present invention will be described in detail with reference to the accompanying drawings. In the following description, the same elements will be designated by the same reference numerals although they are shown in different drawings.

Further, various specific definitions found in the following description are provided only to help general understanding of the present invention, and it is apparent to those skilled in the art that the present invention can be implemented without such definitions. Further, in the following description of the present invention, a detailed description of known functions and configurations incorporated herein will be omitted when it may obscure the subject matter of the present invention.

The present invention relates to a Broadband Wireless Access (BWA) communication system and proposes an apparatus and a method for reducing a PAPR in a communication system using an OFDM scheme (OFDM communication system). Although the following description deals with only the OFDM communication system, the OFDM communication system is only one example and the present invention is not limited by the OFDM communication system. Rather, the present invention can be applied to all wireless communication systems using multi-carriers in order to improve communication quality in the wireless communication systems.

According to the method proposed by the present invention, for reducing a PAPR in an OFDM communication system, symbols are classified into full-symbols and sub-symbols (e.g., half-symbols), and a peak value for each symbol is detected. When the PAPR value is larger than a predetermined threshold set up in the system, the half-symbol is transmitted to reduce the PAPR.

Additionally, the OFDM communication system can show a normal system performance when using a signal having a small PAPR.

As indicated above, the OFDM communication system is a multi-carrier communication system using a plurality of subcarriers, such that the orthogonality between the subcarriers is important in the OFDM communication system. Therefore, the phase is set up for each subcarrier while maintaining the orthogonality between the subcarriers. However, when the phase changes during the course of signal transmission through the subcarriers, the subcarriers may overlap each other. Then, the overlapping signal caused by the phase change may get out of the linear range of an amplifier in the OFDM communication system, and it becomes impossible to achieve normal signal transmission/reception. Therefore, it is necessary for the OFDM communication system to use a signal having the minimum PAPR.

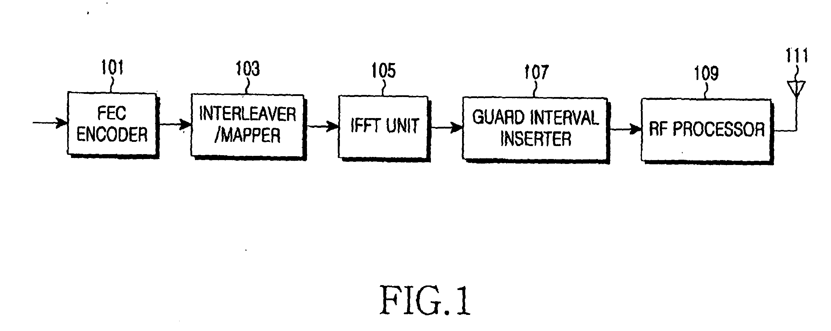

FIG. 1 is a block diagram schematically illustrating a transmitter of a conventional OFDM communication system. More specifically, the transmitter illustrated in FIG. 1 includes a Forward Error Correction (FEC) encoder 101, an interleaver/mapper 103, an Inverse Fourier Transform (IFFT) unit 105, a guard interval inserter 107, a Radio Frequency (RF) processor 109, and a transmission (Tx) antenna 111.

Referring to FIG. 1, when data to be transmitted (including user data bits and control data bits) occur in the OFDM transmitter, the data is input to the FEC encoder 101. Hereinafter, the user data bits and control data bits will be referred to as "information data bits." The FEC encoder 101 encodes the input information data bits according to a predetermined coding scheme and outputs the encoded data to the interleaver/mapper 103. The coding scheme may be a convolutional coding scheme or a turbo coding scheme with a predetermined coding rate.

The interleaver/mapper 103 interleaves and modulates the coded bits output from the FEC encoder 101 according to a predetermined interleaving scheme and a predetermined modulation scheme, thereby generating modulated symbols. Then, the interleaver/mapper 103 outputs the generated modulated symbols to the IFFT unit 105. The modulation scheme may be a QPSK (Quadrature Phase Shift Keying) scheme, an 8PSK (Phase Shift Keying) scheme, QAM (Quadrature Amplitude Modulation) or a 16QAM scheme.

The IFFT unit 105 performs IFFT on the signal from the interleaver/mapper 103 and outputs the IFFT-ed signal to the guard interval inserter 107. The guard interval inserter 107 inserts a guard interval into the signal from the IFFT unit 105 and then outputs the signal to the RF processor 109. The guard interval is inserted to remove interference between a previous OFDM symbol transmitted at a previous OFDM symbol time and a current OFDM symbol to be transmitted at a current OFDM symbol time in an OFDM communication system.

In order to insert the guard interval, a cyclic prefix method or a cyclic postfix method may be used. In the cyclic prefix method, a predetermined number of last samples of an OFDM symbol in a time domain are copied and inserted into a valid OFDM symbol, and in the cyclic postfix method, a predetermined number of first samples of an OFDM symbol in a time domain are copied and inserted into a valid OFDM symbol.

The RF processor 109 processes the signal from the IFFT unit 105 so that the signal can be transmitted through an actual channel. Then, the RF processor 109 transmits the processed signal through the Tx antenna 111. The RF processor 109 normally includes a filter and a front end unit for performing operation in relation to RF signal conversion in the RF path, including digital filtering.

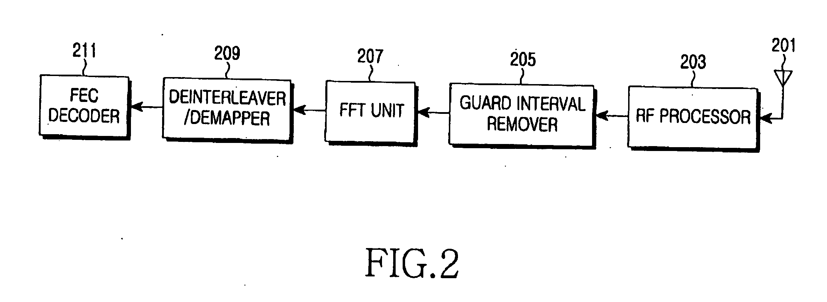

FIG. 2 is a block diagram schematically illustrating a receiver of a conventional OFDM communication system. More specifically, the receiver illustrated in FIG. 2 includes a reception (Rx) antenna 201, an RF processor 203, a guard interval remover 205, a Fast Fourier Transform (FFT) unit 207, a deinterleaver/demapper 209, and an FEC decoder 211.

When the signal transmitted from the transmitter is received through the Rx antenna 201, the received signal contains noise added to the signal when the signal passed through the multi-path channel. The signal received through the Rx antenna 201 is input to the RF processor 203, which down-converts the signal into a signal of an Intermediate Frequency (IF) and then outputs the down-converted signal to the guard interval remover 205.

The guard interval remover 205 receives the signal from the RF processor 203, eliminates the guard interval from the received signal, and then outputs the signal to the FFT unit 207. The FFT unit 207 performs FFT on the signal output from the guard interval remover 205 and then outputs the FFT-ed signal to the deinterleaver/demapper 209.

The deinterleaver/demapper 209 deinterleaves and demodulates the signal from the FFT unit 207 according to schemes corresponding to the interleaving scheme and the modulation scheme used in the transmitter, and then outputs it to the FEC decoder 211. The FEC decoder 211 decodes the signal from the deinterleaver/demapper 209 according to a decoding scheme corresponding to the coding scheme employed in the transmitter, and then outputs the same signal as the information data bits transmitted from the transmitter.

The IFFT performed in the transmitter can be defined by Equation (1) below.

$$x_n = \frac{1}{\sqrt{N}} \sum_{k=0}^{N-1} X_k e^{j2\pi nk/N}, \quad 0 \le n \le N-1, \qquad \ldots\ldots \ (1)$$

In Equation (1), $X_k$ denotes a complex amplitude of a subcarrier.

In the OFDM system, PAPR parameters are determined and defined by Equation (2) below.

$$PAPR = 10\log(\frac{\|\mathbf{x}\|_\infty^2}{\varepsilon[\|\mathbf{x}\|_2^2]/N}) \qquad \ldots\ldots \ (2)$$

In Equation (2), $x$ can take different values. Therefore, we say bout of the signal probability, when PAPR magnitudes excess the $PAPR_0$ specified value, as shown in Equation (3) below.

$$\Pr(PAPR > PAPR_0) \qquad \ldots\ldots \ (3)$$

U.S. Patent No. 6,424,681 "Peak to Average Power Ratio Reduction" discloses a method of PAPR value reduction by redundancy of subcarriers. That is, one part of subcarriers is used for information signal transmittance, i.e., the subcarriers are modulated by information symbols, and another part of the subcarriers is used for generation of a correction signal that is extracted from the resultant time signal got at the IFFT output and leading to $PAPR_0$ value reduction at one and the same probability value.

The PAPR reduction method as described above is usually called the "Tone Reservation (TR)" method. According to the TR method, a part of subcarriers (i.e., tones), which are not used for information signal transmission are appointed from among the total subcarriers. In the receiver, the tones that are not used for transmitting an information signal are disregarded, and the information signals are restored from the other tones. As a result, the structure of the receiver can be simplified.

One of the representative TR methods is the gradient algorithm. The gradient algorithm can be obtained by applying the clipping scheme to the TR method. According to the gradient algorithm, a signal having an impulse characteristic is generated using the tones that are not used for information signal transmission, and the output signal of the IFFT unit is then subjected to the clipping by using the generated signal having the impulse characteristic. Then, if the generated signal having the impulse characteristic is added to the output signal of the IFFT unit, data distortion occurs in only the tones that are not used for information signal transmission and does not occur in the other frequency domain.

The process described above can be expressed by Equations (4) through (7) below. More specifically, a part of the subcarriers is modulated by the information signal $X_k$, which is defined by Equation (4) below.

$$X_k = \begin{cases} X_k, & k \notin \{i_1, i_2, \ldots, i_L\} \\ 0, & k \in \{i_1, i_2, \ldots, i_L\} \end{cases} \qquad \ldots\ldots \ (4)$$

In Equation (4), zero indicates that subcarriers are not modulated by the information symbols (i.e., are made redundant). The redundant subcarriers are modulated by the specially selected bit sequence and can be expressed by Equation (5) below.

$$C_k = \begin{cases} C_k, & k \in \{i_1, i_2, ..., i_L\} \\ 0, & k \notin \{i_1, i_2, ..., i_L\} \end{cases} \qquad \cdots\cdots (5)$$

Referring to Equations (4) and (5), the information signals are allocated to the subcarriers other than the redundant subcarriers as noted from Equation (4), and the correction signals are allocated to the other redundant subcarriers than the subcarriers of Equation (4), as noted from Equation (5). More specifically, from among the information signals, a signal of (X+C), which is obtained by adding a predetermined input signal X and a correction signal C, is output through the IFFT unit of the transmitter. At IFFT output, the generated signal can be expressed by Equation (6) below.

$$\mathbf{x} + \mathbf{c} = Q(\mathbf{X} + \mathbf{C}) \qquad \cdots\cdots (6)$$

In Equation (6), $Q$ denotes an IFFT matrix, generated by elements $q_{n,k} = \frac{1}{\sqrt{N}} e^{j2\pi kn/N}$ shown in Equation (1).

Further, $C_k$ symbols of Equation (5) are selected to minimize the PAPR as shown in Equation (7) below.

$$PAPR(c^*) = \frac{\min_c \|\mathbf{x} + \mathbf{c}\|_\infty^2}{\varepsilon[\|\mathbf{x}\|_2^2]/N} < \frac{\|\mathbf{x}\|_\infty^2}{\varepsilon[\|\mathbf{x}\|_2^2]/N} \qquad \cdots\cdots (7)$$

When the input signal X has a large PAPR, a proper signal, e.g., the correction signal C, for reducing the PAPR of the input signal X is searched for, and the found correction signal C is then added to the input signal X, in order to reduce the PAPR of the resultant signal (X+C).

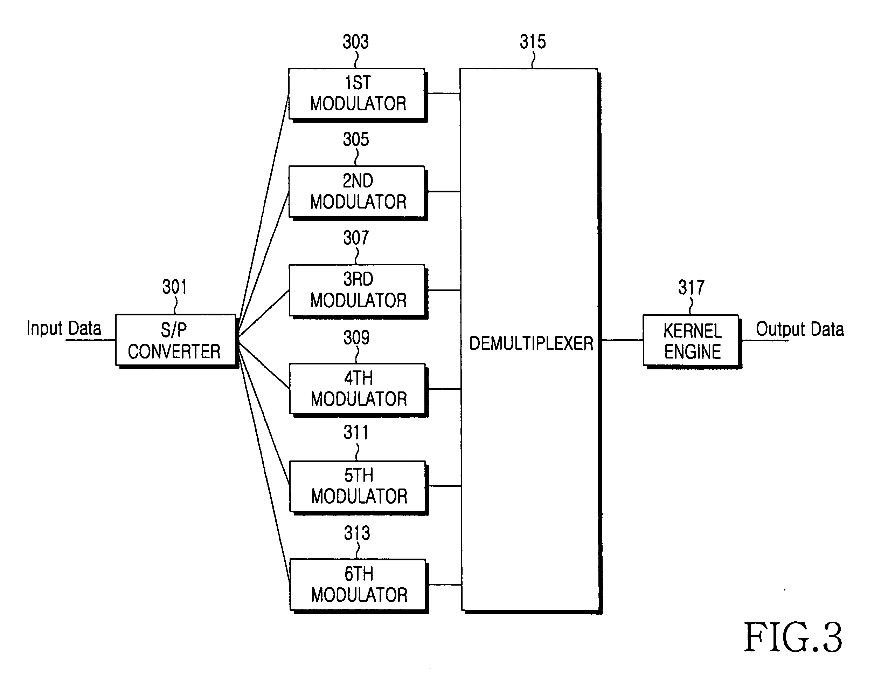

FIG. 3 is a block diagram for illustrating an operation of a transmitter with a subcarrier redundancy in a conventional OFDM communication system. More specifically, FIG. 3 schematically illustrates a multi-carrier transmitter using the TR method in order to reduce the PAPR.

Referring to FIG. 3, a serial-to-parallel (S/P) converter 301 converts input data to parallel data and then outputs the converted parallel data to a plurality of modulators including a first modulator 303 through a sixth modulator 313. That is, the input information signal is distributed to a plurality of subcarriers by the serial-to-parallel converter 301. In distributing the information signal, some of the subcarriers are not used, that is, they are left as redundant subcarriers.

Each of the first modulator 303 through the sixth modulator 313 receives the signal from the serial-to-parallel converter 301, modulates the signal through a modulation scheme set in advance in the system, and then outputs the modulated signal to the demultiplexer 315. The demultiplexer 315 multiplexes the signals from the first modulator 303 through the sixth modulator 313 and then outputs a multiplexed signal to the kernel engine 317. That is, the modulated subcarriers are multiplexed into one signal by the demultiplexer 315. The kernel engine 317 reduces the PAPR value by performing signal correction for the signal from the demultiplexer 315, and then outputs the corrected signal. That is, the kernel engine 317 performs correction for reducing the PAPR value of the signal output from the demultiplexer 315.

The correction described above is performed by addition to signal X of a correction signal C that provides the output signal with a PAPR value not crossing the predetermined threshold $PAPR_0$.

Selection of the optimal values of the correction signal C is quite a difficult mathematical task, which requires a significant timing budget and computer power. Additionally, channel transmission capacity reduction is another disadvantage of the method of the U.S. patent cited above, due to the fact that some carriers are used not for the information symbol transmission, but only for correction signal generation.

Therefore, the present invention proposes a method for minimizing the PAPR while maintaining high transmission capacity through the missed correction procedure. More specifically, according to the proposed by the present invention, in order to reduce a PAPR in an OFDM communication system, symbols are classified into full-symbols and sub-symbols, e.g., half-symbols, and a peak value for each symbol is detected. When a corresponding PAPR value is larger than a predetermined threshold set up in the system, the half-symbol is transmitted to reduce the PAPR.

Accordingly, the transmitter according to the present invention includes an additional IFFT unit, and the receiver includes a symbol detector for detecting a full-symbol or a half-symbol and an additional buffer for collecting the full-symbol.

The technical result is achieved by application of a new PAPR reduction method based on the fact that not all multi-carrier symbols have signal sampling with anomalous amplitude deviations. That is, the overwhelming majority of symbols do not exceed the predetermined $PAPR_0$ threshold, and accordingly, do not require any additional reduction means. A relatively insignificant quantity of symbols include anomalous samples.

It is proposed to divide these symbols into several sub-symbols, for example, into two, each of which includes the diminished number of subcarriers modulated by the input data. The remaining subcarriers are not used, and they have zero amplitude. Accordingly, sub-symbols will not have anomalous amplitude deviations, because the probability of anomalous peak generation is reduced by subcarrier quantity diminishment.

The receiver according to the present invention also detects the diminished sub-symbols, performs demodulation, and then multiplexes the sub-symbols into one signal. For the demodulation according to the present invention, a modified deinterleaver is used. Also, the multiplexing of the demodulated sub-symbols into one signal is performed in such a way that the outcome is a series of information symbols matching the sequence of the modulated full multi-carrier symbol. Thereafter, further processing (e.g., decoding) is done in a similar way to that in a common receiver.

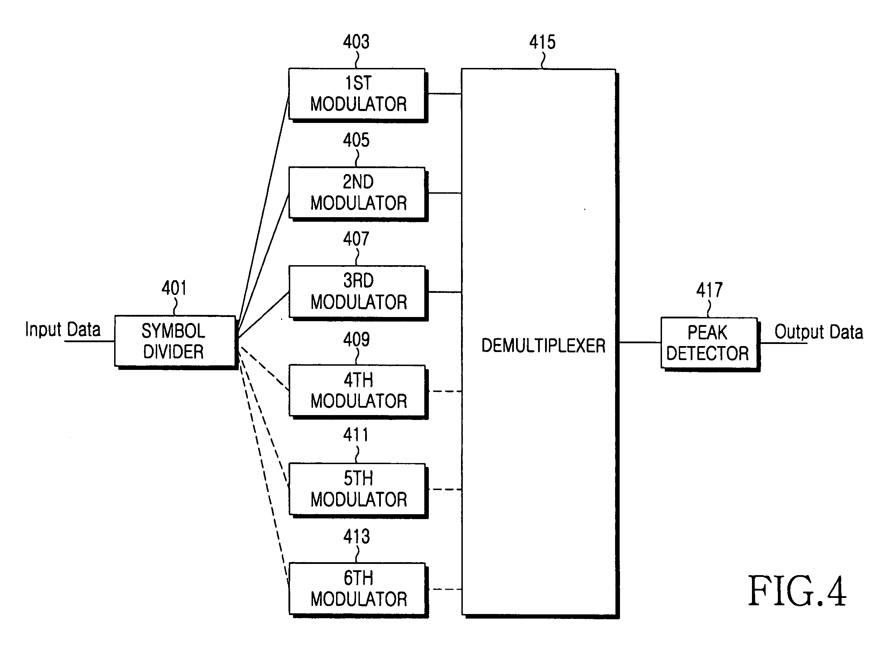

FIG. 4 is a block diagram schematically illustrating a transmitter according to an embodiment of the present invention. More specifically, FIG. 4 schematically illustrates the multi-carrier transmitter, using a symbol dividing scheme in order to reduce the PAPR.

Referring to FIG. 4, the transmitter according to the present invention includes a symbol divider 401, a plurality of modulators including a first modulator 403 through a sixth modulator 413, a demultiplexer 415, and a peak detector 417.

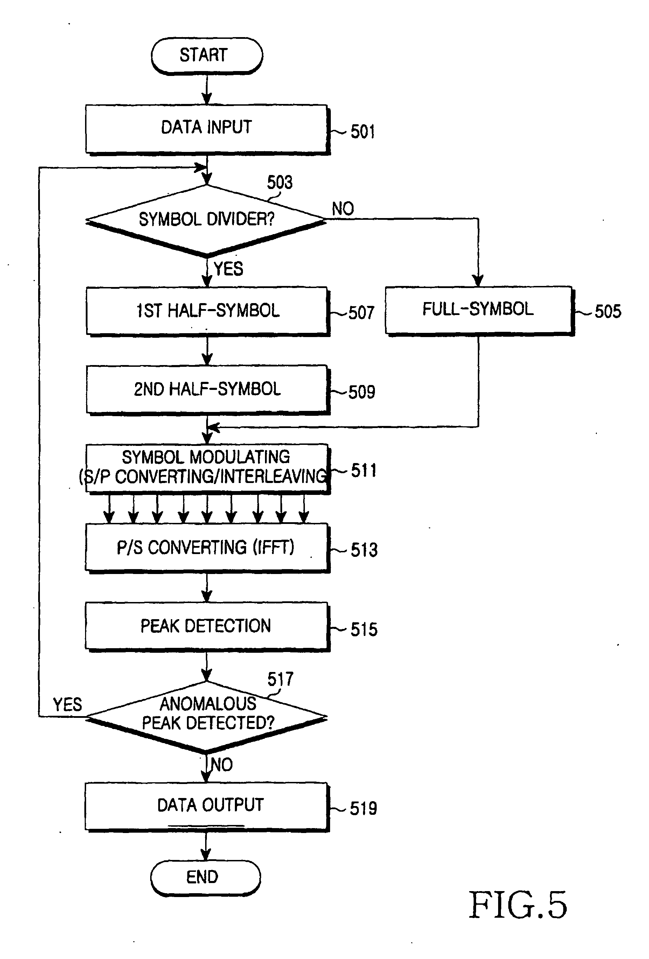

In the transmitter illustrated in FIG. 4, when there is information data to be transmitted, the information data is input to the symbol divider 401. The symbol divider 401 divide the information data into information signals corresponding to subcarriers and then outputs the information signals to the first modulator 403 through the sixth modulator 413. In this case, the information signals may be distributed to either all accessible subcarriers or some of the accessible subcarriers, e.g., half of all accessible subcarriers. When the information signals may be distributed to some of the accessible subcarriers, the multi-carrier symbol is transmitted at several stages as illustrated in FIG. 5. For example, in case of double dividing, a first symbol part is transmitted at a first stage, and a second symbol part is then transmitted at a second stage. This process will be described later in more detail with reference to FIG. 5.

Each of the first modulator 403 through the sixth modulator 413 receives the signal, i.e., subcarrier, from the symbol divider 401, modulates the subcarrier according to the modulation scheme set in advance in the system, and then outputs the modulated subcarrier to the demultiplexer 415. The demultiplexer 415 multiplexes the signals from the first modulator 403 through the sixth modulator 413 into one time symbol and then outputs the time symbol to the peak detector 417. The peak detector 417 detects a peak value for the symbol from the demultiplexer 415, determines if the symbol has been divided and if the symbol has anomalous amplitude deviation, and then outputs data corresponding to the determination.

FIG. 5 is a flowchart for schematically illustrating signal processing by a transmitter according to a preferred embodiment of the present invention. More specifically, FIG. 5 illustrates symbol dividing and peak detection by the transmitter. It is noted, however, that while FIG. 5 illustrates in detail the algorithm of symbol dividing into two sub-symbols, the present invention is not limited to the illustrated example but can be applied whenever the symbol is divided into more than two sub-symbols.

Referring to FIG. 5, when data is input in step 501, the input data is passed to the symbol divider 401. The divider 401 determines whether to divide the symbol into sub-symbols in step 503. In step 503, the peak detector 417 plays an important role in the determining whether to divide the symbol into sub-symbols. That is, the peak detector 417 compares the synthesized time impulse with the threshold $PAPR_0$ and then reports the result of the comparison to the symbol divider 401. Thereafter, the symbol divider 401 makes a decision about the dividing in accordance with the reported result.

Specifically, when the reported result from the peak detector shows that it is unnecessary for the symbol divider 401 to divide the symbol, the process proceeds to step 505 in which the symbol divider 401 generates and outputs a full-symbol.

The full-symbol output from the symbol divider 401 is modulated using subcarriers by the first modulator 403 through the sixth modulator 413 in step 511. Then, in step 513, the full-symbols from the modulators are converted into one time symbol through serial conversion and IFFT in the demultiplexer 415. Thereafter, the time symbol is input to the peak detector 417, and the peak detector 417 detects a peak of the time symbol in step 515.

In step 517, the peak detector 417 compares the peak power of the time symbol with the predetermined threshold $PAPR_0$ set in advance in the system. When the detected peak power of the time symbol does not exceed the threshold $PAPR_0$, the time symbol is transmitted to the output in step 519. However, when the detected peak power of the time symbol exceeds the threshold, that is, when an anomalous peak is detected for the symbol, the full-symbols are not transmitted to the output. That is, when an anomalous peak is detected for the symbol, the peak detector 417 reports the detection to the symbol divider 401. Thereafter, the symbol divider 401 divides the full-symbol based on the report from the peak detector 417.

As indicated above, FIG. 5 corresponds to the case when each full-symbol is divided into two sub-symbols (half-symbols). That is, if it is determined that symbol dividing is necessary in step 503, the symbol divider 401 divides the full-symbol into two sub-symbols, transmits a first sub-symbol (a half part of the full-symbol) at the first stage in step 507, and then transmits a second sub-symbol (the other half part of the full-symbol) at the second stage in step 509.

Thereafter, each of the two sub-symbols output from the symbol divider 401 is modulated by using subcarriers by the first modulator 403 through the sixth modulator 413 in step 511. In step 513, the sub-symbols from the modulators are converted into one time symbol through serial conversion and IFFT in the demultiplexer 415. In this case, because only half of the subcarriers are used for the generation of the time symbol, no threshold crossing is detected in step 517. Therefore, according to the present invention, two half-symbols not exceed are serially transmitted to the output instead of one full multi-carrier symbol with anomalous threshold exceeding.

The above-described process may lead to information frame relay duration increase. However, as the percentage ratio of anomalous symbols to

In order to speed up the multi-carrier symbol generation, modulation, and conversion of a full symbol and its first part from the frequency domain to the time domain have to be done simultaneously. Therefore, the first symbol part is extracted from the output in case of anomalous peak fixation in the peak detector 417.

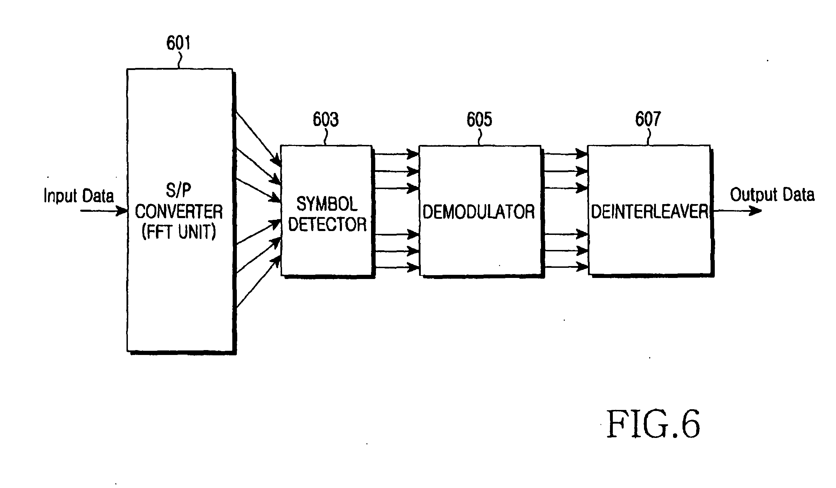

FIG. 6 is a block diagram schematically illustrating a receiver according to an embodiment of the present invention. More specifically, FIG. 6 illustrates a schematic construction of a multi-carrier receiver using a symbol dividing scheme in order to reduce the PAPR.

As illustrated in FIG. 6, the receiver according to an embodiment of the present invention includes a serial-to-parallel converter (FFT unit) 601, a symbol detector 603, a demodulator 605, and a deinterleaver 607. The serial-to-parallel converter (FFT unit) 601 converts input data of a time domain into parallel symbols of a frequency domain and outputs the converted symbols to the symbol detector 603. The symbol detector 603 checks if each of the symbols from the serial-to-parallel converter (FFT unit) 601 is a full-symbol. Because frequencies for information symbol transmission for dividing are known (fixed), the symbol detector 603 analyzes signal amplitude on subcarriers that are not modulated, i.e., having zero amplitude, in the case of symbol dividing into sub-symbols. For example, it is possible to diagnose the arrival of an unfull half-symbol through comparison of signal amplitude sum (e.g., complex envelope module) on these subcarriers or amplitude square sum with the threshold $R_0$.

If an unfull symbol is detected, the demodulator 605 demodulates only the subcarriers on which information symbols are transmitted. Accordingly, the deinterleaver 607 converts symbols transmitted on the selected subcarriers to time symbol sequence. Therefore, conversion is done in such a way that the time sequence remains the same, as during full symbol transmission.

When the first half-symbol processing is done, the receiver processes the second half-symbol. Accordingly, there is no need to detect the unfull signal arrival, because it is clear that the second half-symbol has to follow the first one.

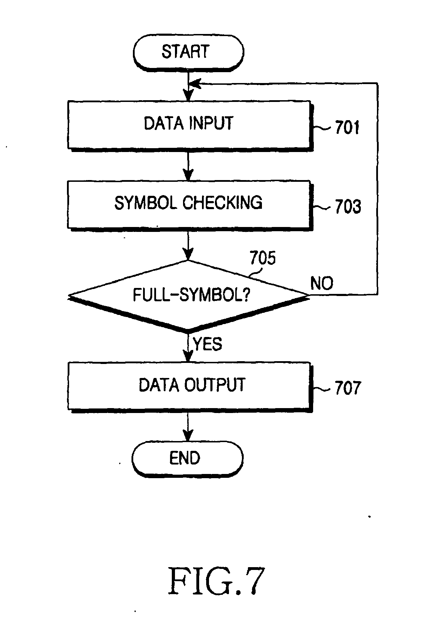

FIG. 7 is a flowchart of signal processing in the receiver according to an embodiment of the present invention. More specifically, FIG. 7 illustrates a processing algorithm of a multi-carrier signal with sub-symbol dividing. It is noted, however, that while the algorithm illustrated in FIG. 7 is for symbol dividing into two sub-symbols, the present invention is not limited to the illustrated example, but can be applied when the symbol is divide into more than two sub-symbols.

Referring to FIG. 7, data is input in step 701. Whether an input signal for the input data is a full-symbol or a half-symbol is determined in steps 703 and 705. When the input signal is a half-symbol, the process returns to step 701 in which another half-symbol is received. However, when the input signal is a full-symbol, the process proceeds to step 707, wherein the data is output.

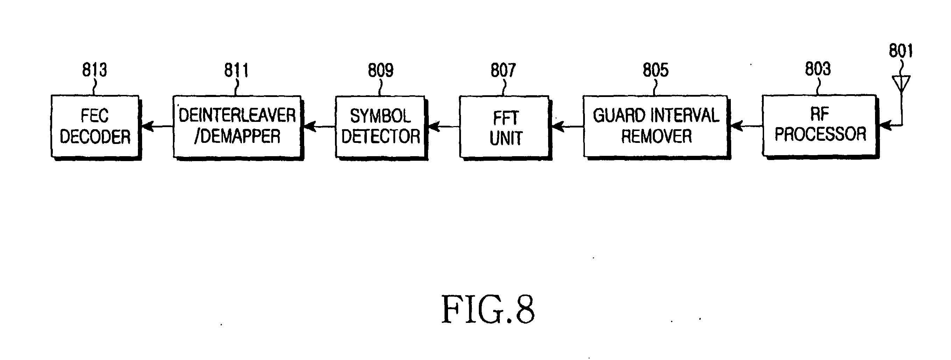

FIG. 8 is a block diagram schematically illustrating a receiver of an OFDM communication system according to a preferred embodiment of the present invention. More specifically, the receiver of the OFDM communication system illustrated in FIG. 8 includes a reception (Rx) antenna 801, an RF processor 803, a guard interval remover 805, an FFT unit 807, a symbol detector 809, a deinterleaver/demapper 811, and an FEC decoder 813.

When the signal transmitted from a transmitter is received through the Rx antenna 801, the received signal contains noise added to the signal while the signal passes through the multi-path channel. The signal received through the Rx antenna 801 is input to the RF processor 803, and the RF processor 803 down-converts the signal received through the Rx antenna into a signal of an Intermediate Frequency (IF) and then outputs the down-converted signal to the guard interval remover 805.

The guard interval remover 805 receives the signal from the RF processor 803, removes the guard interval from the received signal, and then outputs the signal to the FFT unit 807. The FFT unit 807 performs FFT on the signal output from the guard interval remover 805 and then outputs the FFT-ed signal to the symbol detector 809.

The symbol detector 809 detects presence of an unfull symbol, for example, it detects the presence of a symbol in which only half of the subcarriers are modulated by the information signal, and the remaining part has zero amplitude, i.e., is absent. Then, the symbol detector 809 outputs the detected symbol to the deinterleaver/demapper 811.

After an unfull symbol detection, the deinterleaver/demapper 811 performs such unfull symbol demodulation as described above, which takes into account that not all the subcarriers were used for the information transmittance.

After demodulation of all sub-symbols, which form the initial full symbol, the sub-symbols are multiplexed in an output information flow in such a way that the demodulated symbol order matches the symbol order of the initial information flow that is further forwarded to the FEC decoder 813.

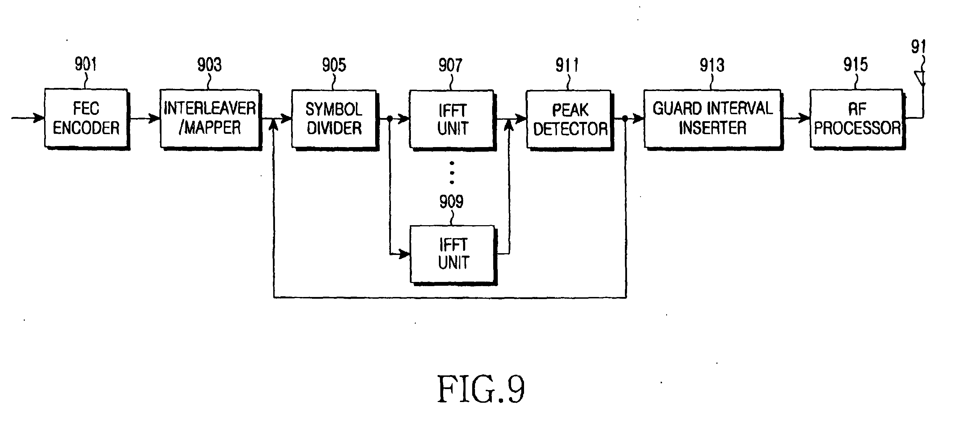

FIG. 9 is a block diagram schematically illustrating a transmitter of an OFDM communication system according to a preferred embodiment of the present invention. Referring to FIG. 9, the transmitter includes an FEC encoder 901, an interleaver/mapper 903, a symbol divider 905, a plurality of IFFT units 907 through 909, a peak detector 911, a guard interval inserter 913, an RF processor 915, and a Tx antenna 917.

When data to be transmitted (including user data bits and control data bits) occurs in the OFDM transmitter, the data is input to the FEC encoder 901. As indicated above, the user data bits and control data bits are referred to herein as "information data bits."

The FEC encoder 901 encodes the input information data bits according to a predetermined coding scheme and outputs the encoded data to the interleaver/mapper 903. The coding scheme may be a convolutional coding scheme or a turbo coding scheme having a predetermined coding rate. The interleaver/mapper 903 interleaves and modulates the coded bits output from the FEC encoder 901 according to a predetermined interleaving scheme and a predetermined modulation scheme, thereby generating modulated symbols.

The interleaver/mapper 903 outputs the generated modulated symbols to the symbol divider 905. The modulation scheme may be a QPSK (Quadrature Phase Shift Keying) scheme, an 8PSK (Phase Shift Keying) scheme, a QAM (Quadrature Amplitude Modulation) or a 16QAM (Quadrature Amplitude Modulation) scheme.

The symbol divider 905 generates a full-symbol sequence or at least two sub-symbol sequences using the signal output from the interleaver/mapper 903 and then outputs the generated full-symbol sequence or sub-symbol sequences to the corresponding IFFT unit, for example, the IFFT unit 907 and/or the IFFT unit 909.

Each of the IFFT units 907 through 909 performs IFFT on the signal from the interleaver/mapper 903 or the symbol divider 905 and outputs the IFFT-ed signal to the peak detector 911. In this case, the IFFT units 907 through 909 receive one full-symbol sequence or at least two sub-symbol sequences from the symbol divider 905, simultaneously converts the input sequence or sequences into a time domain symbol sequence, and then outputs the converted sequence or sequences to the peak detector 911.

Although the transmitter illustrated in FIG. 9 includes a plurality of IFFT units, the present invention is not limited to the example shown in FIG. 9. Instead, the transmitter according to the present invention may include a single IFFT unit that can perform an operation proper for the symbol dividing. Further, the single IFFT unit may be adaptively implemented properly for the symbol dividing in accordance with system setup. For example, when the symbol is divide into half-symbols, the transmitter may include one or two IFFT units.

The peak detector 911 receives the full-symbol sequence or at least two sub-symbol sequences from the IFFT units 907 through 909, and detects presence of a peak value of the symbols. When the peak detector 911 detects an anomalous peak, the peak detector 911 reports the detection to the symbol divider 905, such that the symbol divider 905 performs symbol dividing. When the peak detector 911 detects no anomalous peak, the peak detector 911 outputs the corresponding symbol sequence to the guard interval inserter 913.

The guard interval inserter 913 inserts a guard interval into the signal from the peak detector 911 and then outputs the signal to the RF processor 915. The guard interval removes interference between a previous OFDM symbol transmitted at a previous OFDM symbol time and a current OFDM symbol to be transmitted at a current OFDM symbol time in an OFDM communication system. In order to insert the guard interval, a cyclic prefix method or a cyclic postfix method may be used. In the cyclic prefix method, a predetermined number of last samples of an OFDM symbol in a time domain are copied and inserted into a valid OFDM symbol, and in the cyclic postfix method, a predetermined number of first samples of an OFDM symbol in a time domain are copied and inserted into a valid OFDM symbol.

The RF processor 915 processes the signal from the guard interval inserter 913 so that the signal can be transmitted through an actual channel. Then, the RF processor 915 transmits the processed signal through the Tx antenna 917. The RF processor 915 includes a predetermined filter and a front end unit for performing operation in relation to RF signal conversion in the RF path, including digital filtering.

As described above, the present invention proposes an apparatus and a method for minimizing the PAPR in an OFDM communication system. According to the PAPR minimization method of the invention, when the peak value of an OFDM symbol exceeds a maximum allowable level, the OFDM symbol is divided into more than one sub-symbol, in order to reduce the PAPR.

Hereinafter, performance of the present invention will be discussed based on simulation results according to the embodiments of the present invention. It is assumed that simulation parameters as shown in Table 1 below were used in the simulation. The simulation showed overflow rate as shown in Table 2.

Table 1

| Total packets | 30,000 |
|---|---|
| 16QAM symbols per packet | 148 |
| Reserved subcarriers for half-data symbols | -26, -24, -23, -18, -16, -15, -14, -11, -9, -5, -4, -1, 1, 2, 3, 4, 6, 8, 13, 14, 15, 22, 24, 26 |

Table 2

| Power gain, dB | Additional symbols | Overflow samples before filter | Overflow samples after filter | Overflow samples outside guard interval | Decrease in speed, % |
|---|---|---|---|---|---|
| 2 | 339 | 0 | 2 | 0 | 0.008 |
| 2.5 | 1601 | 0 | 13 | 0 | 0.036 |
| 3 | 6312 | 0 | 50 | 0 | 0.14 |
| 3.5 | 20525 | 0 | 127 | 0 | 0.46 |
| 4 | 59754 | 1 | 356 | 1 | 1.35 |

The simulation results as shown in Table 2 show that an increase the average power gain by 4 dB is possible while data rate reduction is only 1.35%.

For comparison, in case of 6 tones reservation, data rate reduction is 12.5% (6/48).

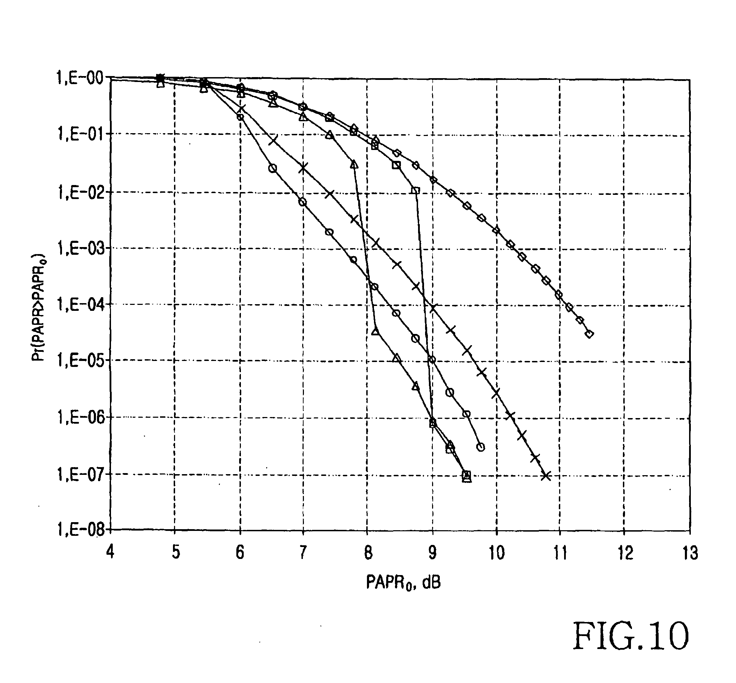

FIG. 10 is a graph illustrating the performance of the present invention. First, calculations prove that using the claimed method, it is possible to get analogous best PAPR value reduction in comparison with the method based on subcarrier redundancy without significant information rate reduction (reduction in scope of 1-10 %).

FIG. 10 illustrates results of a modulation that was performed to estimate effectiveness of the method of the present invention, i.e., the symbol dividing method. The results are presented in comparison with the iteration method based on subcarrier redundancy.

Referring to FIG. 10, the following Modulation parameters were used:

- ■ Odd symbols $10^7$
- ■ 16 QAM modulation
- ■ for IFFT 64 points

- • method of tone redundancy :

    o quantity of redundant tones 10% (6)
    o integration quantity of the gradient method 2 and 4.

- • Symbol dividing method:

    o threshold 8 dB and 9 dB

- ■ for IFFT 256 points

- • method of tone redundancy :

    o quantity of redundant tones 10% (25)
    o integration quantity of the gradient method 2 and 30.

- • Symbol dividing method:

    o threshold 8.8 dB and 9.5 dB

**EP 1 662 737 B1**

Calculations for 64-point IFFT demonstrate that at the threshold of symbol dividing in 8 dB, information rate losses are 10% corresponding to similar rate loss at redundancy of 10% of tones. At dividing threshold of 9 dB, rate loss is 1.9%.

Calculations for 256-point IFFT demonstrated that at the threshold of symbol dividing of 8.8 dB, information rate loss is 10% and corresponds to similar rate losses at redundancy of 10 % tones. At dividing threshold of 9.5 dB, the rate loss is 2.6%.

In spite of OFDM symbol dividing, some of the information subcarriers are not used. The possibility of combining the claimed method with the subcarrier redundancy method arises. In this case, correction impulse is generated on the subcarriers. This leads to additional PAPR reduction when the threshold crossing of signal amplitude (instantaneous capacity) occurs in any sub-symbol.

As described above, the present invention provides an apparatus and a method that reduces a PAPR in a broadband wireless communication system. Further, the present invention can achieve PAPR reduction with a high transmission capacity without a signal correction process.

According to the method proposed by the present invention, symbols are classified into full-symbols and sub-symbols. When a PAPR value of each symbol is larger than a predetermined threshold set up in the system, the sub-symbols are transmitted in such a way that effectively reduces the PAPR.

While the present invention has been shown and described with reference to certain preferred embodiments thereof, it will be understood by those skilled in the art that various changes in form and details may be made therein without departing from the scope of the invention as defined by the appended claims.

**Claims**

1.    A method of signal processing by a transmitter in order to reduce a Peak to Average Power Ratio, PAPR, in a multi-carrier communication system, the method comprising the steps of:

   a) inputting (501) information data bits as input data in the transmitter;
   b) converting (511) a symbol into parallel sub-carriers;
   c) modulating (511) the parallel sub-carriers;
   d) generating (513) one transmission symbol by converting the modulated sub-carriers through IFFT and serial conversion;
   e) comparing (517) a PAPR of the transmission symbol with a threshold set in the system;
   f) outputting the transmission symbol as one full-symbol, including only information symbol, when PAPR of the transmission symbol does not exceed the threshold;
   g) dividing (503, 505, 509) the full-symbol into at least two sub-symbols, when the PAPR of the transmission symbol exceeds the threshold and performing steps b) to e) with each of the sub-symbols, wherein each of the sub-symbols includes a diminished number of subcarriers modulated by the input data with the remaining subcarriers not used and having zero amplitude, and outputting each sub-symbol as transmission symbol

2.    A method for signal processing by a receiver in order to reduce Peak to Average Power Ratio, PAPR, in a multi-carrier communication system, the method comprising the steps of:

   a) detecting (701) a reception symbol;
   b) checking (703, 705) whether the detected reception symbol is a full-symbol transmitting only information symbols or a sub-symbol transmitting only a part of the information symbols by analyzing signal amplitude on subcarriers that are not modulated and have zero amplitude wherein frequencies for dividing the into sub-symbols are known;
   c) either demodulating the sub-carriers of the detected full-symbol;
   d) or demodulating only the sub-carriers transmitting information symbols from among the detected sub-symbols; and

3.    An apparatus for signal transmission to perform the method of claim 1
   a symbol divider (401, 905)adapted to perform the step g)
   a serial to parallel converter adapted to perform step b); to perform step c);
   a multiplexer (415) adapted to perform step d);
   a peak detector adapted to perform step e); and
   transmission unit (917) for transmitting the generated transmission symbol, wherein sub-symbols are serially transmitted.

4. The apparatus as claimed in claim 3, the peak detector is adapted to reports detection information to the symbol divider when the PAPR of the transmission symbol exceeds the threshold.

5. The apparatus as claimed in claim 3, wherein the demultiplexer includes at least one of IFFT unit (907, 909) corresponds to the number of the modulated sub-carriers.

6. An apparatus for signal reception to perform the method of claim 2, the apparatus comprising:

a symbol detector (603, 809) adapted to perform steps a) and b) a demodulator(605) adapted to perform steps c) and d)
a deinterleaver demapper (607, 811) for converting the demodulated sub-carriers to one symbol,

**Patentansprüche**

1. Verfahren zur Signalverarbeitung durch eine Sendeeinrichtung zum Reduzieren eines Verhältnisses von maximaler zu mittlerer Leistung (Peak to Average Power Ratio - PAPR) in einem Mehrfachträger-Kommunikationssystem, wobei das Verfahren die folgenden Schritte umfasst:

a) Eingeben (501) von Informations-Datenbits als Eingabedaten in die Sendeeinrichtung;
b) Umwandeln (511) eines Voll- oder Teil-Symbols in parallele Hilfsträger;
c) Modulieren (511) der parallelen Hilfsträger;
d) Erzeugen (513) eines Sendesymbols durch Umwandeln der modulierten Hilfsträger über IFFT und serielle Umwandlung;
e) Vergleichen (517) eines PAPR des Sendesymbols mit einem in dem System eingestellten Schwellenwert;
f) Ausgeben des Sendesymbols als ein Voll-Symbol, das nur ein Informationssymbol enthält, wenn das PAPR des Sendesymbols den Schwellenwert nicht übersteigt;
g) Teilen (503, 505, 509) des Voll-Symbols in wenigstens zwei Teil-Symbole, wenn das PAPR des Sendesymbols den Schwellenwert übersteigt, und Durchführen der Schritte b) bis e) mit jedem der Teil-Symbole, wobei jedes der Teil-Symbole eine verringerte Anzahl von Hilfsträgern enthält, die mit den Eingabedaten moduliert sind, und die verbleibenden Hilfsträger nicht verwendet werden und Null-Amplitude haben, und Ausgeben jedes Teil-Symbols als Sendesymbol.

2. Verfahren zur Signalbearbeitung durch eine Empfangseinrichtung zum Reduzieren eines Verhältnisses von maximaler zu mittlerer Leistung (Peak to Average Power Ratio - PAPR) in einem Mehrfachträger-Kommunikationssystem, wobei das Verfahren die folgenden Schritte umfasst:

a) Erfassen (701) eines Empfangssymbols;
b) Prüfen (703, 705), ob das erfasste Empfangssymbol ein Voll-Symbol, das nur Informationssymbole sendet, oder ein Teil-Symbol ist, das nur einen Teil der Informationssymbole sendet, durch Analysieren einer Signalamplitude auf Teilträgern, die nicht moduliert sind und Null-Amplitude haben, wobei Frequenzen zum Teilen in Teil-Symbole bekannt sind; entweder
c) Demodulieren der Teilträger des erfassten Voll-Symbols; oder
d) Demodulieren nur der Teilträger, die Informationssymbole senden, aus den erfassten Teil-Symbolen.

3. Vorrichtung für das Senden von Signalen zum Durchführen des Verfahrens nach Anspruch 1, wobei die Vorrichtung umfasst:

eine Symbol-Teileinrichtung (401, 905), die zum Durchführen des Schritts g) eingerichtet ist;
einen Seriell-Parallel-Wandler, der zum Durchführen von Schritt b) eingerichtet ist;
wenigstens einen Modulador (403, 405, 407, 409, 411, 413; 907, 909), der zum Durchführen von Schritt c) eingerichtet ist;
einen Multiplexer (415), der zum Durchführen von Schritt d) eingerichtet ist;
eine Spitzenerfassungseinrichtung, die zum Durchführen von Schritt e) eingerichtet ist; und
eine Sendeeinheit (917) zum Senden des erzeugten Sendesymbols, wobei Teil-Symbole seriell gesendet werden.

4. Vorrichtung nach Anspruch 3, wobei die Spitzen-Erfassungseinrichtung so eingerichtet ist, dass sie der Symbol-Teileinrichtung Erfassungsinformationen mitteilt, wenn das PAPR des Sendesymbols den Schwellenwert übersteigt.

5. Vorrichtung nach Anspruch 3, wobei der Demultiplexer entsprechend der Anzahl der modulierten Hilfsträger wenigstens eine IFFT-Einheit (907, 909) enthält.

6. Vorrichtung für Signalempfang zum Durchführen des Verfahrens nach Anspruch 2, wobei die Vorrichtung umfasst:

   eine Symbol-Erfassungseinrichtung (603, 809), die so eingerichtet ist, dass sie Schritte a) und b) durchführt;
   eine Demodulationseinrichtung (605), die so eingerichtet ist, dass sie Schritte c) und d) durchführt;
   eine Deinterleaving-/Demapping-Einrichtung (607, 811) zum Umwandeln der demodulierten Hilfsträger in ein Symbol.

**Revendications**

1. Procédé de traitement de signaux par un émetteur afin de réduire le rapport de la puissance de crête à la puissance moyenne, PAPR, dans un système de communication à porteuses multiples, le procédé comprenant les étapes qui consistent :

   a) à appliquer en entrée (501) des bits de données d'information en tant que données d'entrée dans l'émetteur ;
   b) à convertir (511) un symbole (complet ou sous-symbole) en sous-porteuses parallèles ;
   c) à moduler (511) les sous-porteuses parallèles ;
   d) à générer (513) un symbole d'émission en convertissant les sous-porteuses modulées par transformation IFFT et conversion en série ;
   e) à comparer (517) un rapport PAPR du symbole d'émission à un seuil établi dans le système ;
   f) à délivrer en sortie le symbole d'émission en tant que symbole complet comprenant uniquement un symbole d'information, lorsque le rapport PAPR du symbole d'émission ne dépasse pas le seuil ;
   g) à diviser (503, 505, 509) le symbole complet en au moins deux sous-symboles, lorsque le rapport PAPR du symbole d'émission dépasse le seuil, et à exécuter les étapes b) à e) avec chacun des sous-symboles, chacun des sous-symboles comprenant un élément diminué de sous-porteuses modulées par les données d'entrée, les sous-porteuses restantes n'étant pas utilisées et ayant une amplitude nulle, et

   à délivrer en sortie chaque sous-symbole en tant que symbole d'émission.

2. Procédé de traitement de signaux par un récepteur afin de réduire le rapport de la puissance de crête à la puissance moyenne, PAPR, dans un système de communication à porteuses multiples, le procédé comprenant les étapes qui consistent :

   a) à détecter (701) un symbole de réception ;
   b) à vérifier (703, 705) si le symbole de réception détecté est un symbole complet émettant uniquement des symboles d'informations ou un sous-symbole émettant uniquement une partie des symboles d'informations en analysant une amplitude de signal ou des sous-porteuses qui ne sont pas modulées et ont une amplitude nulle, où des fréquences pour la division en sous-symboles sont connues ;
   c) soit à démoduler les sous-porteuses du symbole complet détecté ;
   d) soit à démoduler uniquement les sous-porteuses émettant des symboles d'informations parmi les sous-symboles détectés ; et

3. Appareil pour l'émission de signaux destiné à exécuter le procédé de la revendication 1 ;
   un diviseur de symboles (401, 905) conçu pour exécuter l'étape g) ;
   un convertisseur série-parallèle conçu pour exécuter l'étape b) ;
   au moins un modulateur (403, 405, 407, 409, 411, 413 ; 907, 909) conçu pour exécuter l'étape c) ;
   un multiplexeur (415) conçu pour exécuter l'étape d) ;
   un détecteur de crête conçu pour exécuter l'étape e) ;
   une unité d'émission (917) destinée à émettre le symbole d'émission généré, dans lequel des sous-symboles sont émis en séries.

4. Appareil selon la revendication 3, dans lequel le détecteur de crête est conçu pour rendre compte d'une information de détection au diviseur de symboles lorsque le rapport PAPR du symbole d'émission dépasse le seuil.

5. Appareil selon la revendication 3, dans lequel le démultiplexeur comprend au moins une unité IFFT (907, 909) correspondant au nombre de sous-porteuses modulées.

6. Appareil pour la réception de signaux destiné à exécuter le procédé de la revendication 2, l'appareil comportant :

un détecteur de symbole (603, 809) conçu pour exécuter les étapes a) et b) ;
un démodulateur (605) conçu pour exécuter les étapes c) et d) ; et
un dispositif de désentrelacement/désapplication (607, 811) destiné à convertir les sous-porteuses démodulées en un symbole.

FIG.1

FIG.2

FIG.3

Input Data

301 S/P CONVERTER

303 1ST MODULATOR
305 2ND MODULATOR
307 3RD MODULATOR
309 4TH MODULATOR
311 5TH MODULATOR
313 6TH MODULATOR

315 DEMULTIPLEXER

317 KERNEL ENGINE

Output Data

EP 1 662 737 B1

FIG.4

START

DATA INPUT ～501

SYMBOL DIVIDER? ～503

NO

YES

1ST HALF-SYMBOL ～507

FULL-SYMBOL ～505

2ND HALF-SYMBOL ～509

SYMBOL MODULATING
(S/P CONVERTING/INTERLEAVING) ～511

P/S CONVERTING (IFFT) ～513

PEAK DETECTION ～515

ANOMALOUS
PEAK DETECTED? ～517

YES

NO

DATA OUTPUT ～519

END

FIG.5

FIG.6

EP 1 662 737 B1

FIG.7

FIG.8

EP 1 662 737 B1

```
  901            903            905            907           911             913            915
  ⌇              ⌇              ⌇              ⌇             ⌇               ⌇              ⌇
┌─────────┐  ┌─────────────┐  ┌─────────┐  ┌────────┐  ┌──────────┐  ┌───────────────┐  ┌───────────┐
│  FEC    │  │ INTERLEAVER │  │ SYMBOL  │  │  IFFT  │  │  PEAK    │  │ GUARD INTERVAL│  │    RF     │
│ ENCODER │→ │  /MAPPER    │→ │ DIVIDER │→ │  UNIT  │→ │ DETECTOR │→ │   INSERTER    │→ │ PROCESSOR │
└─────────┘  └─────────────┘  └─────────┘  └────────┘  └──────────┘  └───────────────┘  └───────────┘

                                              ⋮
                                           ┌────────┐
                                    909 ⌇  │  IFFT  │
                                           │  UNIT  │
                                           └────────┘
```

FIG.9

FIG.10

**EP 1 662 737 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040136314 A1
- US 6424681 B